# EUROPÄISCHE PATENTANMELDUNG

(11) **EP 2 264 875 A1**
(43) Veröffentlichungstag der Anmeldung: **22.12.2010**
(21) Anmeldenummer: 10182216.1
(22) Anmeldetag: 01.04.2004
(51) Int. Cl.: H02K 35/02, H01L 41/113, H01F 7/14, H01F 7/06

(54) **Elektromagnetischer Energiewandler und Verfahren zum Umwandeln von mechanischer Energie in elektrische Energie**

(30) Priorität: 07.04.2003 DE 10315765
(62) Teilanmeldung aus: 04724978.4
(71) Anmelder: EnOcean GmbH, 82041 Oberhaching (DE)
(72) Erfinder: Schmidt, Frank, 82054 Altkirchen (DE)
(74) Vertreter: Epping - Hermann - Fischer

(57) **Zusammenfassung**

Die Erfindung betrifft einen Elektromagnetischen Energiewandler mit zumindest einem Permanentmagneten (1) einem weichmagnetischem Element (9) und einer elektrischen Spule (6),
wobei durch den Permanentmagnet (1) und das weichmagnetische Element (9) ein magnetischer Kreis mit einer ersten Flussrichtung gebildet ist und die Spule einen Teil des magnetischen Kreises umschließt, wobei das weichmagnetische Element (9) und der Permanentmagnet (1) um eine Achse (4) zueinander drehbar gelagert sind und durch Anschlagstellen (8a-8d) Endpunkte einer damit möglichen Drehbewegung gebildet sind.

## Beschreibung

Die Erfindung betrifft einen elektromagnetischen Energiewandler mit einem Permanentmagneten, einem weichmagnetischem Element, und einer elektrischen Spule.

Elektromagnetische Energiewandler sind in vielen verschiedenen Ausführungsformen bekannt. Beispielhaft seien hier genannt z.B. Generatoren oder Elektromotoren. Im Grunde ist jeder elektromagnetische Energiewandler zum Wandeln von mechanischer in elektrische, bzw. von elektrischer in mechanische Energie geeignet. Zumeist sind diese elektromagnetischen Energiewandler so ausgelegt, dass eine mechanische Energie in Form einer Drehbewegung durch den elektromechanischen Energiewandler in elektrische Energie gewandelt wird.

Solche elektromagnetischen Energiewandler haben die Aufgabe gemeinsam, beständig und über einen längeren Zeitraum elektrische Verbraucher mit Energie zu versorgen, oder beständig über einen längeren Zeitraum elektrische Energie in mechanische Energie zu wandeln. Je nach Anforderung sind dabei verschiedene Größen und Ausführungsformen bekannt. Als Grundregel kann dabei davon ausgegangen werden, dass die Wandlung von elektrischer in mechanische Energie bzw. von mechanischer in elektrische Energie mit zunehmender Größe des elektromagnetischen Wandlers mit höheren Wirkungsgraden, d.h. mit geringeren Verlusten zu bewerkstelligen ist. D.h. im Umkehrschluss, je kleiner ein elektromagnetischer Wandler sein soll, umso größer werden die im elektromagnetischen Wandler bedingten Anteile der Verlustenergie, bzw. umso geringer wird der Wirkungsgrad. Dies ist in besonderen für elektromagnetische Wandler von Bedeutung, die energieautarke Systeme mit elektrischer Energie versorgen, zum Beispiel Funkschalter oder Funksender, die über keine batteriebetriebene oder eine drahtgebundene Energieversorgung verfügen. So eingesetzte elektromagnetische Wandler müssen zum Zeitpunkt des Energiebedarfs ausreichend Energie zum Betrieb eines solchen Systems zur Verfügung stellen. Da die räumlichen Verhältnisse für solche Systeme oftmals stark begrenzt sind so dass kleinste elektromagnetische Wandler eingesetzt werden müssen, kann auch von sehr geringen Wirkungsgraden nach der oben genannten Grundregel ausgegangen werden.

Es ist demzufolge die Aufgabe der Erfindung, einen elektromagnetischen Energiewandler vorzuschlagen, der für energieautarke Systeme, wie insbesondere Funkschalter, eine Energieversorgung darstellt, die zum Zeitpunkt des Energiebedarfs ausreichend Energie zum Betrieb des Systems, z.B. des Funkschalters sowie ein entsprechendes Verfahren zum Umwandeln von mechanischer Energie in elektrische Engergie zur Verfügung stellt.

Diese Aufgabe wird erfindungsgemäß durch die in den nebengeordneten Patentansprüchen beschriebenen Maßnahmen gelöst, und durch die in den darauf rückbezogenen Unteransprüchen vorteilhaft erweitert.

Dabei ist ein elektromagnetischer Energiewandler vorgeschlagen mit zumindest einem Permanentmagneten, zumindest einem weichmagnetischen Element und zumindest einer elektrischen Spule, wobei durch den Permanentmagneten und das weichmagnetische Element ein magnetischer Kreis gebildet ist und die Spule einen Teil des weichmagnetischen Elementes umschließt, wobei das Permanentmagnetelement und das weichmagnetische Element so angeordnet sind, dass eines der beiden magnetischen Elemente in Bezug auf das jeweils andere magnetische Element bewegbar ist, die elektrische Spule einen Teil des weichmagnetischen Elements umgibt, das bewegbare magnetische Element durch Federkraft in einer ersten Position gehalten ist und durch Anlegen einer äußeren mechanischen Kraft, die größer als die Federkraft ist, in eine zweite Position bewegt wird, und sich der im Inneren des weichmagnetischen Elements an der ersten Position bestehende Magnetfluss von dem an der zweiten Position bestehenden Magnetfluss unterscheidet und durch Anschlagstellen Endpunkte einer mit der Achse möglichen Drehbewegung gebildet sind.

Das Vorteilhafte an diesem elektromagnetischen Wandler ist, dass die Anzahl der bewegten Elemente gering ist, ebenso wie die Bewegung an sich eher gering ist, da sie nur eine vorbestimmte Wegstrecke in jeweils einer Richtung beschreibt, nämlich von Anschlagpunkt zu Anschlagpunkt. Rotationsbedingte Reibungsverluste durch beispielsweise Rollen- oder Kugel-oder Gleitlager, die hohe Drehzahlen über lange Zeit standhalten müssen, entfallen somit. Auch ist die Zahl der Bauteile für einen solchen Energiewandler denkbar klein, da im Grunde die oben genannten drei Bauteile, nämlich Permanentmagnet, weichmagnetisches Element und elektrische Spule und die verbindende Achse alle notwendigen Bauteile beschreiben. Aufwendige Stromabnahme und Übergabesysteme, wie Schleifkontakte, Kontaktkollektoren etc., sind nicht erforderlich, die damit verbundenen Reibungsverluste und Verschleißerscheinungen treten bei dem erfindungsgemäßen elektromagnetischen Wandler aus diesem Grund nicht auf. Durch die Achse, mit der der Permanentmagnet und das weichmagnetische Element drehbar zueinander gelagert sind, wird im Zusammenhang mit den Anschlagstellen eine Umkehrung des magnetischen Flusses durch die elektrische Spule bewirkt. Durch die Anschlagstellen wird erreicht, dass die Umkehrung des magnetischen Flusses möglichst rasch, insbesondere schlagartig geschieht. Diese Eigenschaft trägt der Gesetzmäßigkeit Rechnung, dass die Geschwindigkeit der Änderung des magnetischen Flusses direkt proportional zur gewandelten elektrischen Energie ist. Die Spule, die dabei vorzugsweise um das weichmagnetische Element des Magnetkreises angeordnet ist, erhält dadurch die höchste Induktion. Dies ist besonders vorteilhaft dadurch bedingt, da diese hohe Induktion nicht durch ein Schließen oder Öffnen des Magnetkreises, sondern durch die Änderung der Richtung des Magnetkreises um den doppelten Betrag geändert wird. Die damit erzeugte rasche magnetische Flussänderung führt zu einer kurzzeitigen Spannungsinduktion in der Spule, und die damit erzeugte elektrische Energie kann mit Gleichrichtern vorzugsweise Halbleitermetallkontaktdioden gleichgerichtet und nach Zwischenspeicherung z.B. einen Kondensator zum kurzzeitigen Betrieb eines Funkschalters oder Funksensors genutzt werden.

Die Auslösung der Drehbewegung geschieht z.B. durch Einbringung einer zusätzlichen Kraft, beispielsweise durch einen Anwender. Liegt z.B. das weichmagnetische Element einem Ende an dem Nordpol des Permanentmagneten und mit dem anderen Ende an dem Südpol des Permanentmagneten, so wird diese Position durch die magnetische Kraft gehalten. Zur Betätigung des elektromagnetischen Energiewandlers muss diese magnetische Haltekraft überwunden werden. Dies geschieht durch Einbringen einer zusätzlichen Kraft von außen in der Drehrichtung, entgegen der magnetischen Haltekraft. Ist die eingebrachte Kraft größer als die magnetische Haltekraft, beginnt schlagartig eine Drehbewegung in Richtung der eingebrachten Kraft. Dabei wird 1. der bestehende Magnetkreis unterbrochen, und 2. beim Erreichen der Anschlagstellen der Magnetkreis in umgekehrter Richtung wieder geschlossen. Sind die Kontaktflächen an den Anschlagstellen direkt durch den Permanentmagnet und das weichmagnetische Element gebildet, so liegt dem magnetischen Fluss kein weiterer Widerstand entgegen, wie ihn beispielweise ein Luftspalt bilden würde, und eine maximale Änderung des magnetischen Flusses in einer extrem kurzen Zeit ist damit möglich.

Vorteilhaft sind zwei Endlagen der Drehbewegung gebildet, zwischen denen die Drehbewegung wie eine Art Wippbewegung stattfindet. Beide Endlagen stellen unterstützt durch die magnetischen Selbsthaltekräfte stabile Endlagen der möglichen Drehbewegung dar. Mit jedem Einbringen einer Kraft von außen in die jeweils der magnetischen Selbsthaltekraft entgegenwirkende Richtung, wird somit ein Umschnappen in schlagartiger Weise eingeleitet, und elektrische Energie erzeugt. Um den zeitlichen Ablauf vorteilhaft zu beeinflussen, ist es sinnvoll, den Winkel, den die Drehbewegung beschreibt, klein zu halten, so dass durch die Bewegung an sich die dafür aufgewendete Zeit möglichst gering ist. Der entscheidende Faktor in Bezug auf die Erzeugung der Menge an elektrischer Energie ist nicht die Wegstrecke der Drehbewegung, sondern im wesentlichen die zeitliche Änderung des magnetischen Flusses, der insbesondere durch die Umkehrung des magnetischen Flusses verstärkt wird.

In einer vorteilhaften Ausführungsform ist eine Ruhelage der Drehbewegung durch ein Federelement unterstützt und zwar derart, dass die zweite Ruhelage nach dem Erreichen durch Krafteinbringung von außen sofort wieder in die erste Ruhelage zurückschnappt, da die zweite Ruhelage durch die Kraft des Federelementes instabil gestaltet ist. Das heißt, die Betätigung des Energiewandlers durch Krafteinwirkung von außen entgegen der magnetischen Selbsthaltekraft und entgegen der Federkraft, bewirkt beim Überwinden der Selbsthaltekraft ein schlagartiges Umschnappen in die zweite Ruhelage. Getrieben durch die Federkraft wird ein ebenso schlagartiges Zurückschnappen in die erste Ruhelage erreicht. Die damit erzeugte elektrische Energie ist demzufolge die doppelte Menge, als durch ein einfaches Umschnappen von der ersten in die zeite Ruhelage.

Es ist eine Frage der Dimensionierung des Federelementes und auch eine Frage des besonderen Anwendungsfalles, welche der im Folgenden kurz beschriebenen ebenso vorteilhaften Ausführungsformen Anwendung findet.

So ist das Federelement zusammen mit den magnetischen Elementen so dimensionierbar, dass eine Drehbewegung aus der ersten Ruhe- oder der zweiten Ruhelage heraus durch die Kraft des Federelements unterstützt wird, womit eine geringere Krafteinwirkung von außen zur Betätigung des elektromagnetischen Wandlers erforderlich ist. Das heisst, das Federelement ist nicht stark genug dimensioniert, um diesen Prozess wieder umzukehren und somit einen zweifachen Energieertrag zu bewirken.

Anders könnte beispielsweise das Federelement so gestaltet sein, dass sich die Federkraft mit den magnetischen Kräften in einer Mittellage der Drehbewegung aufhebt und damit eine Energieerzeugung in Form eines Tastelementes in beiden Richtungen möglich ist. Die Menge der Energie ist damit selbstverständlich geringer, als in einer der vorgenannten Ausführungsformen, ist aber letztendlich auch hier eine Frage der Dimensionierung von Permanentmagnet, weichmagnetischem Element und Spule.

Die Spule ist vorteilhaft um das weichmagnetische Element angeordnet so dass das weichmagnetische Element einen Spulenkern bildet, da dort die größte Flussänderung durch den Permanentmagneten erreichbar ist. Eine Anordnung der Spule um den Permanentmagneten hätte bei weitem nicht diese Wirkung.

Da beide Elemente, Permanentmagnet und weichmagnetisches Element zueinander drehbar gelagert sind, bleibt es letztendlich dem Anwendungsfall überlassen, welches der beiden Elemente mit einem dritten Element, z.B. einem Gehäuse fest verbunden ist. Gegenüber diesem Gehäuse oder drittem Element stützt sich auch die Feder zur Ausübung ihrer Kraft ab. Auch ist eine Feder gewissermaßen als Spiralfeder so an den beiden Elementen anordenbar, dass die Kraft direkt zwischen den beiden Elementen wirkt. Entscheidend ist im Sinne der Erfindung, dass durch die Drehbewegung die möglichst kurz gestaltet werden soll, eine Änderung, insbesondere eine Umkehrung des magnetischen Flusses durch eine Spule erreicht wird. Die Schlagartigkeit dieser Änderung ist ausschlaggebend für die gewonnene elektrische Energie.

Als weichmagnetisches Material eignen sich dazu beispielsweise Eisenferrit, eine Nickel-Eisen-Legierung oder auch die sogenannten Elektro- oder Trafobleche. In den oben genannten Ausführungsbeispielen ist die Verwendung eines solchen elektromagnetischen Wandlers für Funkschalter oder Funksensoren, insbesondere aber für Funkschalter besonders vorteilhaft, da ein solcher elektromagnetischer Wandler zum Zeitpunkt des Betätigen des Funkschalters die Schaltbewegung zur Einleitung der Drehbewegung verwendet werden kann. Damit ist infolge der Drehbewegung eine Spannung induziert, die zur Energieversorgung des Funkschalters Verwendung findet.

Im Folgenden ist die Erfindung anhand eines Ausführungsbeispiels und drei Figuren näher erläutert. Es zeigt:
- Figur 1: einen elektromagnetischen Wandler in einer ersten Ruhelage,
- Figur 2: einen elektromagnetischen Wandler in einer zweiten Ruhelage,
- Figur 3: einen elektromagnetischen Wandler in einer anderen Ausführungsform.

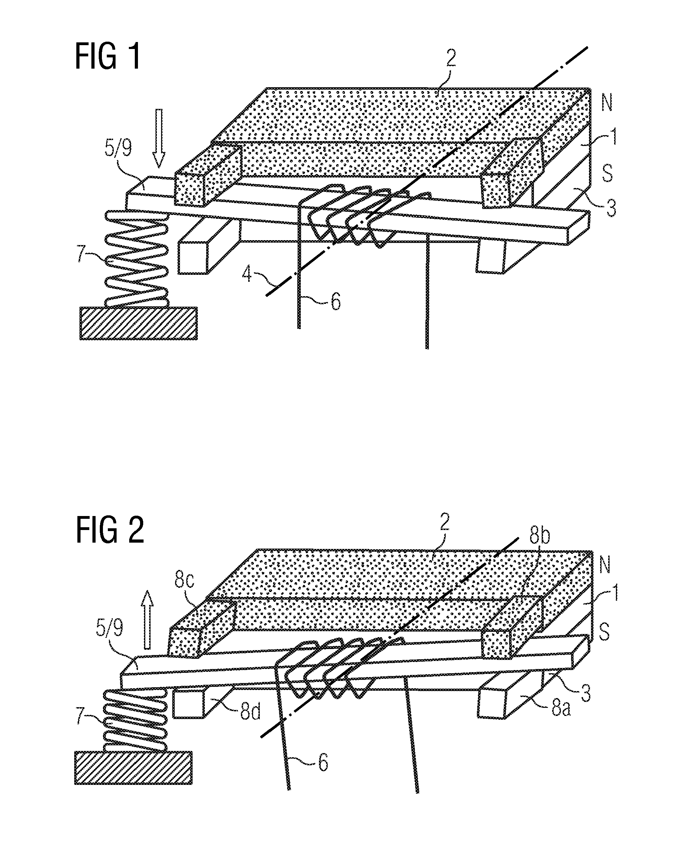

Figur 1 zeigt einen erfindungsgemäßen elektromagnetischen Wandler, bei dem ein Permanentmagnet 1 mit einer ersten Permanentmagnetschicht 2 und einer zweiten Permanentmagnetschicht 3 gebildet ist. Eine Achse 4 bildet die Drehachse, um diese herum die Drehbewegung stattfindet. In dem Ausführungsbeispiel ist ein bewegliches Element 5 drehbar mit der Achse 4 gegenüber dem Permanentmagneten 1 gelagert. Um das bewegliche Element 5 ist zumindest teilweise eine elektrische Spule angeordnet, in die bei einer Änderung des magnetischen Flusses elektrischer Strom bzw. Spannung induziert wird. Ein Federelement 7 wirkt mit seiner Federkraft einer nach außen eingebrachten Kraft entgegen. Die von außen eingebrachte Kraft drückt dann entgegen der Federkraft nach unten und überwindet damit ab einer bestimmten Größe die magnetischen Haltekräfte, wodurch durch die von außen eingebrachte Kraft eine Drehbewegung eingeleitet wird, die schlagartig in die zweite Ruhelage überführt.

Diese zweite Ruhelage ist in Figur 2 dargestellt. An den Permanentmagneten sind Anschlagstellen 8a, 8b, 8c und 8d ausgebildet, die jeweils gegenüberliegend als Nord- und Südpol, ausgebildet sind. Somit ist die Drehbewegung nur innerhalb dieser Anschlagstellen möglich. Ein abruptes Anschlagen des beweglichen Elementes 5 an den Anschlagstellen 8a bis 8d bewirkt damit ein abruptes, ja schlagartiges, Ändern der magnetischen Flussrichtung in dem beweglichen Element 5. Vorteilhafterweise ist dieses bewegliche Element in dem Ausführungsbeispiel als weichmagnetisches Element 9 ausgebildet. Diese weichmagnetische Ausbildung ermöglicht ein schnelles Umorientieren der magnetischen Flussrichtung in dem beweglichen Element. Die Federkraft des Federelementes 7 ist so einstellbar, dass die in Figur 2 dargestellte zweite Ruhelage eine instabile Lage ist, und durch das Federelement das bewegliche Element 5 bzw. das weichmagnetische Element 9 wieder in die erste Ruhelage, so wie sie in Figur 1 dargestellt ist, zurückgetrieben wird. Dies ist ein Beispiel für das energieeffizienteste Ausführungsbeispiel.

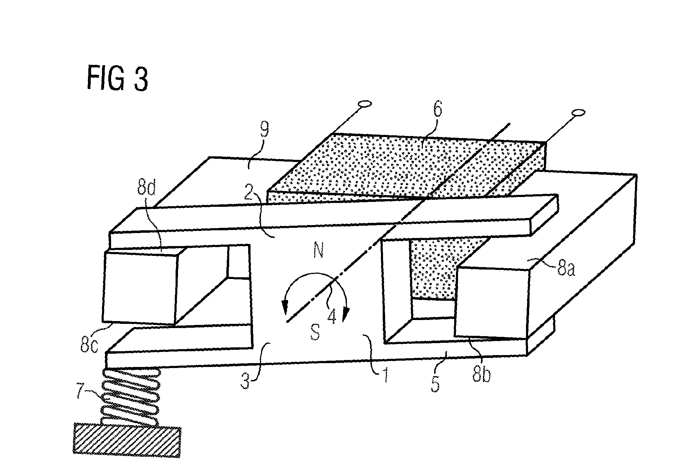

Der in Figur 3 in einer anderen Ausführungsform dargestellte Energiewandler zeigt eine andere konstruktive Ausführung des Permanentmagneten und des weichmagnetischen Elementes 9. Der Permanentmagnet 1 verfügt auch hier vorzugsweise über eine schichtartige Bildung, so dass eine erste Permanentmagnetschicht 2 und eine zweite Permanentmagnetschicht 3 gebildet sind. Die Achse 4 stellt auch hier die Drehachse dar, um der sich die beiden Elemente zueinander, insbesondere aber der Permanentmagnet innerhalb der durch die Anschlagstellen 8a bis 8d gebildeten Freiheitsgrade bzw. Winkelgrade drehbar gelagert ist. In diesem Falle ist das bewegliche Element 5 als Permanentmagnet ausgebildet und das weichmagnetische Element steht demgegenüber fest, was insbesondere auf die Kontaktstellen für die Spule 6 vorteilhaft ist, da diese Ausführungsform dann von längerer Lebensdauer ist, da mechanisch die elektrischen Kontaktstellen der Spule 6 nicht beansprucht sind.

Im Prinzip eignen sich beide Ausführungsformen besonders für die Verwendung bei Funkschaltern, die keine eigene Energieversorgung, sondern mit einem Schaltimpuls die Energieversorgung für ein Funksignal erhalten.

Mit einem Energiewandler, wie er hier vorgeschlagen ist, ist es möglich, bei Krafteinwirkung und zusätzlich beim Nachlassen der Kraft Energie zu wandeln. Des weiteren ist eine von der Betätigungsgeschwindigkeit unabhängige Mindestenergie zu wandeln, da selbst bei langsamem Einbringen der Kraft mit dem Zeitpunkt des Überschreitens der Haltekraft ein schlagartiges Umschlagen in die andere Ruhelage erfolgt. Damit sind auf einfache Weise Kippschalter sowie Taster realisierbar. Da abhängig von der Richtung, in der die Änderung des magnetischen Flusses erfolgt, auch die Polung der erzeugten elektrischen Energie unterschiedlich ist, ist diese Information zusätzlich in einem Funkschalter verwendbar, um z.B. zwei verschiedene Funktionen eines Funkschalters voneinander getrennt abbilden zu können.

Wird Kraft auf dieses bewegliche Teil ausgeübt, passiert solange nichts, bis die durch den Permanentmagneten hervorgerufene Haltekraft des beweglichen Teils überschritten wird. Dann klappt der bewegliche Teil relativ rasch in die zweite stabile Position, in der er wieder durch die Selbsthaltekräfte des Permanentmagneten fixiert bleibt. Dieses Umklappen geschieht auch bei langsamer Erhöhung der Betätigungskraft mit einer minimalen Geschwindigkeit, die durch die Dimensionierung des Magnetkreises eingestellt werden kann. Auf diese Weise wird sichergestellt, daß auch bei langsamer Betätigung hinreichend Energie zum Betrieb des Funksensors/Funkschalters gewandelt wird.

Der magnetische Fluß durch den von der Spule 6 umwickelten Teil des Magnetkreises 5 ändert beim Umklappen um eine Achse 4 oder einen Kipp-Punkt seine Richtung. Dies ist Konstruktionen vorzuziehen, in denen der magnetische Fluß lediglich unterbrochen oder geschlossen wird, da die Flußänderung hier doppelt so groß ist.

Die rasche magnetische Flußänderung führt zu einer kurzzeitigen Spannungsinduktion in der Spule, um die so erzeugte elektrische Energie kann mit Gleichrichtern, vorzugsweise Halbleiter-Metallkontakt-Dioden gleichgerichtet und nach Zwischenspeicherung in einem Kondensator zum kurzzeitigen Betrieb eines Funkschalters oder Funksensors genutzt werden. Denkbar ist auch, mehrere Spulen zu verwenden, und auf eine Gleichrichtung der Energie, die insbesondere bei kleinen Spannungen hohe Verluste erzeugt, zu verzichten.

Das Federelement 7 dient dazu, dass aus einem Umschalter mit 2 festen Positionen ein Taster wird. Dazu wird die Federkraft so dimensioniert, daß nach dem Umklappen die Federkraft ausreicht, um das bewegliche Teil wieder gegen die Haltekraft in die Anfangsposition zurückschnellen zu lassen, sobald die Betätigungskraft klein genug wird. Auf diese Weise ist eine konstruktiv einfache Realisierung eines monostabilen Schalters möglich. Hier wird erfindungsgemäß so-wohl beim Drücken als auch beim Loslassen des Schalters Ener-gie erzeugt.

Die Polarität der erzeugten Spannung wechselt mit der Art der Betätigung. Erfindungsgemäß kann diese Polarität von der angeschlossenen Elektronik gemessen werden und die darin enthaltene Information über die Richtung des Zustandswechsels mit dem auszusendenden Funksignal übertragen werden.

Die Mechanik, welche auf den beweglichen Teil des Energiewandlers einwirkt, hat zumindest eine Betätigungseinrichtung, wie z.B. eine Tasterfläche. Erfindungsgemäß können auch mehrere Betätigungseinrichtungen auf den einen Energiewandler in der gleichen Weise einwirken, wenn Funkschalter mit mehreren Kanälen realisiert werden sollen. In diesem Fall wird durch eine hinreichende Anzahl von Sensoren, z.B. einen Sensor pro Betätigungseinrichtung, sichergestellt, daß die jeweils aktivierte Betätigungseinrichtung von der angeschlossenen Elektronik ermittelt wird. Die Information wird dann in das zu übertragende Funktelegramm eingebracht.

Der mit dem Energiewandler betreibbare Funksender besitzt mindestens eine Betätigungseinrichtung, welches auf den Energiewandler mechanisch einwirkt. Besitzt er mehrere Betätigungseinrichtungen, wirken diese alle auf den einen Energiewandler und zusätzlich auf eine geeignete Anzahl Sensoren zur Detektion der jeweils aktivierten Betätigungseinrichtung. Die Informationen über die Identität des Betätigungsfeldes kann somit in das auszusendende Funksignal eingebracht werden.

Die Information über die Art der Betätigung (Drücken oder Loslassen bei Tastschaltern bzw. Drücken an verschiedenen Betätigungsflächen bei Kippschaltern) kann über die Polarität der erzeugten Spannung sensiert werden und ebenfalls mit dem Funksignal übertragen werden.

### Bezugszeichenliste

- 1: Permanentmagnet
- 2: erste Permanentmagnetschicht
- 3: zweite Permanentmagnetschicht
- 4: Achse
- 5: bewegliches Element
- 6: elektrische Spule
- 7: Federelement
- 8, 8a, 8b, 8c, 8d: Anschlagstellen
- 9: weichmagnetisches Element

## Patentansprüche

1. Elektromagnetischer Energiewandler, der dazu ausgebildet ist, mechanische Energie in elektrische Energie umzuwandeln, mit zumindest:
zwei magnetischen Elementen, einem Permanentmagnetelement und einem weichmagnetischen Element; und
einer elektrischen Spule,
wobei
- das Permanentmagnetelement und das weichmagnetische Element so angeordnet sind, dass sie einen magnetischen Kreis bilden, und eines der beiden magnetischen Elemente in Bezug auf das jeweils andere magnetische Element bewegbar ist,
- die elektrische Spule einen Teil des weichmagnetischen Elements umgibt,
- das bewegbare magnetische Element durch Federkraft in einer ersten Position gehalten ist und durch Anlegen einer äußeren mechanischen Kraft, die größer als die Federkraft ist, in eine zweite Position bewegt wird, und
- sich der im Inneren des weichmagnetischen Elements an der ersten Position bestehende Magnetfluss von dem an der zweiten Position bestehenden Magnetfluss unterscheidet.

2. Elektromagnetischer Energiewandler nach Anspruch 1, wobei sich der im Inneren des weichmagnetischen Elements an der ersten Position bestehende Magnetfluss in Bezug auf die Richtung und/oder die Stärke von dem an der zweiten Position bestehenden Magnetfluss unterscheidet.

3. Elektromagnetischer Energiewandler nach Anspruch 1 oder 2, wobei sich das bewegbare magnetische Element von der zweiten Position zurück in die erste Position bewegt, wenn die äußere mechanische Kraft die Federkraft nicht mehr überschreitet.

4. Elektromagnetischer Energiewandler nach einem der vorhergehenden Ansprüche, wobei das weichmagnetische Element und/oder das Permanentmagnetelement durch eine magnetische Haltekraft in einer ersten Position gehalten ist.

5. Elektromagnetischer Energiewandler nach einem der vorhergehenden Ansprüche, wobei für die Bewegung des bewegbaren magnetischen Elements eine erste und eine zweite Begrenzungsposition gebildet sind, wobei die erste Begrenzungsposition durch eine Gruppe von Anschlagpunkten und die zweite Begrenzungsposition durch eine weitere Gruppe von Anschlagpunkten gebildet ist.

6. Elektromagnetischer Energiewandler nach Anspruch 5, wobei durch magnetische Einrastkräfte in der ersten oder zweiten Begrenzungsposition eine stabile erste oder zweite Ruhelage gebildet ist.

7. Elektromagnetischer Energiewandler nach einem der vorhergehenden Ansprüche, wobei die Bewegung über einen Winkel kleiner als 90° erfolgt.

8. Elektromagnetischer Energiewandler nach einem der vorhergehenden Ansprüche, wobei es sich bei dem weichmagnetischen Material um Eisen, Ferrit oder eine Nickel/Eisen-Legierung handelt, oder es aus elektrischen Schichtstoffen oder Transformatorblechen besteht.

9. Elektromagnetischer Energiewandler nach einem der vorhergehenden Ansprüche, wobei er eine eigenständige Vorrichtung mit elektrischer Energie versorgt.

10. Elektromagnetischer Energiewandler nach einem der vorhergehenden Ansprüche, darüber hinaus mit einem Schalter mit eigenständiger Energieversorgung, der einen Funkschalter oder einen Funksignalsender umfasst.

11. Elektromagnetischer Energiewandler nach einem der vorhergehenden Ansprüche, darüber hinaus mit einem Kontaktabschnitt, der dazu ausgelegt ist, die aufgebrachte äußere mechanische Kraft aufzunehmen.

12. Elektromagnetischer Energiewandler nach einem der vorhergehenden Ansprüche, wobei das weichmagnetische Element ein erstes Ende und ein zweites Ende aufweist und der Permanentmagnet einen Nordpol und einen Südpol aufweist, und das erste Ende den Nordpol berührt und das zweite Ende den Südpol berührt, um den Magnetkreis mit der ersten Flussrichtung zu bilden, und das erste Ende den Südpol berührt und das zweite Ende den Nordpol berührt, um den Magnetkreis mit der zweiten Flussrichtung zu bilden.

13. Elektromagnetischer Energiewandler nach Anspruch 12, wobei in der ersten Ruhelage ein erstes Ende des weichmagnetischen Elements einen Nordpol des Permanentmagneten berührt und ein zweites Ende des weichmagnetischen Elements einen Südpol des Permanentmagneten berührt, und in der zweiten Ruhelage das erste Ende des weichmagnetischen Elements den Südpol des Permanentmagneten berührt und das zweite Ende des weichmagnetischen Elements den Nordpol des Permanentmagneten berührt.

14. Verfahren zum Umwandeln von mechanischer Energie in elektrische Energie durch eine Vorrichtung, die zumindest Folgendes umfasst:
zwei magnetische Elemente, die ein Permanentmagnetelement und ein weichmagnetisches Element aufweisen; und
eine elektrische Spule;
wobei das Permanentmagnetelement und das weichmagnetische Element so angeordnet sind, dass sie einen magnetischen Kreis mit einem Magnetfluss im Inneren des weichmagnetischen Elements bilden, und eines der beiden magnetischen Elemente in Bezug auf das jeweils andere magnetische Element bewegbar ist,
wobei die elektrische Spule einen Teil des weichmagnetischen Elements umgibt, und das Verfahren zumindest die Schritte aufweist:
Anlegen einer Federkraft an das bewegbare magnetische Element, um es in einer ersten Position zu halten; und
Anlegen einer äußeren mechanischen Kraft, die gegen die Federkraft gerichtet ist und diese überschreitet, um das bewegbare magnetische Element in eine zweite Position zu bewegen, so dass sich der magnetische Fluss im Inneren des weichmagnetischen Elements ändert.

15. Verfahren zum Umwandeln von mechanischer Energie in elektrische Energie nach Anspruch 14, wobei sich die Richtung und/oder die Stärke des Magnetflusses im Inneren des weichmagnetischen Elements ändert.

16. Verfahren zum Umwandeln von mechanischer Energie in elektrische Energie nach Anspruch 14, darüber hinaus den Schritt umfassend, die äußere mechanische Kraft auf eine Höhe zu reduzieren, die die Federkraft nicht mehr überschreitet.
